# EUROPÄISCHE PATENTANMELDUNG

(11) **EP 0 588 138 A1**
(43) Veröffentlichungstag der Anmeldung: **23.03.1994**
(21) Anmeldenummer: 93113816.8
(22) Anmeldetag: 30.08.1993
(51) Int. Cl.: C02F 11/08, C02F 1/02

(54) **Verfahren und Vorrichtung zur Wärmerückgewinnung beim chemischen Abbau von Klärschlamm oder Abwasser**

(30) Priorität: 10.09.1992 DE 4230266
(71) Anmelder: BAYER AG, 51368 Leverkusen (DE)
(72) Erfinder: Thomas, Melin, Dr., D-51061 Köln (DE); Horak, Otto, Dipl.-Ing., D-51065 Köln (DE); Holzer, Klaus, Dipl.-Ing., D-51381 Leverkusen (DE)

(57) **Zusammenfassung**

Bei einem Verfahren zur Naßoxidation, Druckhydrolyse oder Chemolyse von Klärschlamm oder Abwasser bei erhöhten Temperaturen und Drucken wird ein Wärmeaustausch zwischen dem kalten Zulauf und dem heißen Ablauf dadurch realisiert, daß im heißen Ablauf eine Druckentspannung durchgeführt wird, die dabei entstehenden Brüden von der wässrigen Phase abgetrennt, zum kalten Zulauf zurückgeführt und mit ihm in direktem Kontakt gebracht werden, so daß zumindest ein Teil der Brüden auskondensiert und den Zulauf aufheizt. Bei der Anlage zur Durchführung dieses Verfahrens ist der Reaktionsstufe 8 ein Entspannungsorgan 10 und ein Phasentrennapparat 11 nachgeschaltet. Von dem Phasentrennapparat 11 führt eine Brüdenrückführungsleitung 12 zu einem der Reaktionsstufe 8 vorgeschalteten Gas-Flüssig-Kontaktapparat 3.

## Beschreibung

Die Erfindung betrifft ein Verfahren zum Wärmeaustausch zwischen kaltem Zulauf und heißem Ablauf bei einer Anlage zur Naßoxidation, Druckhydrolyse oder Chemolyse von Klärschlamm oder Abwasser bei erhöhter Temperatur und erhöhtem Druck. Ferner betrifft die Erfindung eine Vorrichtung zur Durchführung des Verfahrens.

Der chemische Abbau von Klärschlammen oder Abwässern durch Naßoxidation oder Druckhydrolyse erfolgt üblicherweise bei erhöhten Temperaturen, d.h. bei Temperaturen deutlich über 100°C. Ein hoher Wärmebedarf und damit hohe Energiekosten lassen sich bei diesen Reaktionen nur dann vermeiden, wenn ein Wärmeaustausch zwischen dem heißen Ablaufstrom aus der Anlage und dem kalten Zulaufstrom erfolgt, d.h. Vorkehrungen zur Wärmerückgewinnung getroffen werden. Zu diesem Zweck wurden bisher im Gegenstrom betriebene indirekte Wärmeaustauscher eingesetzt. Diese Technik wird z.B. in Chemie-Ingenieur-Technik 62 (1990) Nr. 7, Seiten 555 bis 557, beschrieben.

Es hat sich jedoch herausgestellt, daß sich häufig auf den Wärmeaustauscherflächen Beläge bilden, die den Wärmeaustausch verschlechtern und - was besonders gravierend ist - zu schwerwiegenden Beeinträchtigungen der Verfügbarkeit der Anlage führen. Dieser Nachteil tritt insbesondere auf der Seite des aufzuheizenden Stromes auf, wenn sich z.B. bei der Aufheizung unlösliche Stoffe bilden. Ein Beispiel dafür sind Eisenphosphate. Daneben finden aber auch bei vielen anderen Stoffen bei einer Temperaturerhöhung Ausfällungen statt, die zur Belagbildung, Verkrustung und damit zur Verschlechterung des Wärmeübergangs und häufig zu einer völligen Verstopfung führen. Bekannt sind diese Effekte bei der Hydrolyse von Belebtschlämmen. Sie können aber auch bei anderen Suspensionen und auch bei Abwässern auftreten.

Ein weiterer Nachteil der konventionellen Wärmeaustauscher liegt in der erhöhten Wahrscheinlichkeit der Ausbildung von Gaspolstern auf der Ablaufseite. Beim Einsatz des bei den auftretenden chemischen Beanspruchungen üblichen Wärmetauscherwerkstoffs Titan für Naßoxidationen können spontane Reaktionen zwischen Sauerstoff und Werkstoff auftreten ("Titanbrand"), die zu schwerwiegenden Gefahren und unter Umständen zur Zerstörung der Anlage führen können.

Der Erfindung liegt die Aufgabe zugrunde, bei einem Verfahren zur Wärmerückgewinnung beim chemischen Abbau von Klärschlämmen oder Abwässern die Verfügbarkeit der Anlage und die Betriebssicherheit zu erhöhen.

Diese Aufgabe wird erfindungsgemäß dadurch gelöst, daß in dem heißen Ablauf der Reaktionsstufe (Naßoxidation oder Druckhydrolyse) eine Druckentspannung durchgeführt wird, daß die dabei entstehenden Brüden von der wäßrigen Phase abgetrennt, zum kalten Zulauf zurückgeführt und dann mit ihm in direkten Kontakt gebracht werden. Bei der Vermischung mit dem Zulauf kondensiert zumindest ein Teil der Brüden aus und heizt den Zulauf auf. Vorzugsweise beträgt der auskondensierte Anteil des in den Brüden enthaltenen Wasserdampfes mindestens 70 %. Bei dem erfindungsgemäßen Verfahren findet also kein indirekter Wärmeaustausch, sondern ein direkter Wärmeaustausch statt.

Reicht die bei einstufiger Entspannung und Kondensation in den Zulauf übertragbare Wärme nicht zur Deckung des Energiebedarfs aus, so wird das Verfahren vor allem bei großen Anlagen vorzugsweise so durchgeführt, daß die Entspannung im Ablauf in mehreren Druckstufen erfolgt und die entstehenden Brüden in ebenso vielen Stufen im Gegenstrom in den Zulauf eingespeist werden.

Der Wärmeaustausch zwischen Brüden und Zulauf geschieht in einem oder mehreren Gas-Flüssig-Kontaktapparaten. Dies kann im Gegen-, Gleich- oder Kreuzstrom erfolgen, wobei im Falle größerer Anteile von nichtkondensierbaren Gasen in den Brüden vorzugsweise Gegenstrom Verwendung findet.

Die Anlage zur Durchführung des beschriebenen Verfahrens ist erfindungsgemäß dadurch gekennzeichnet, daß der Reaktionsstufe ein Entspannungsorgan und ein Phasentrennapparat nachgeschaltet sind und daß vom Phasentrennapparat eine Brüdenrückführungsleitung zu einem der Reaktionsstufe vorgeschalteten Gas-Flüssig-Kontaktapparat führt.

Als Entspannungsorgane eignen sich vorzugsweise druckgeregelte Entspannungsventile und als Phasentrennapparate Zyklonabscheider. Der Gas-Flüssig-Kontaktapparat besteht vorteilhaft aus einem Einspritzkondensator.

Gemäß einer zur Naßoxidation bevorzugten Ausführung wird die Reaktionsstufe durch eine oder mehrere hintereinandergeschaltete Blasensäulen gebildet.

Mit der Erfindung werden folgende Vorteile erzielt:
- Die bei dem bisher üblichen Verfahren auf Anbackungen, Verkrustungen und Verstopfungen der Wärmeaustauscher zurückzuführende Störungs- und Gefahrenquelle kann vollständig beseitigt werden.
- Auf den teuren, in der Regel aus Sonderwerkstoffen bestehenden Wärmeaustauscher kann verzichtet werden.
- Weiterhin hat sich herausgestellt, daß bei der Entspannungsverdampfung im Ablauf eine nahezu vollständige Entgasung bzw. Strippung des Ablaufs stattfindet. Dadurch werden flüchtige Organica und CO₂ aus der flüssigen Phase des Ablaufs entfernt.

Im folgenden werden Ausführungsbeispiele der Erfindung anhand von Zeichnungen näher erläutert. Es zeigen:
- Fig. 1: ein Verfahrensschema zur Naßoxidation von industriellem Klärschlamm und
- Fig. 2: ein Verfahrensschema für die Druckhydrolyse von Abwasser mit zweistufiger Entspannung.

Der in einem Tank 1 befindliche, auf einen Trockensubstanzgehalt von 40 bis 45 g TS pro 1 eingedickte Klärschlamm wird mittels einer Pumpe 2 in einen Einspritzkondensator 3 eingedüst (Düse 4). In dem als Rührbehälter 5 ausgeführten Sumpf des Einspritzkondensators 3 wird zur Vorhydrolyse und zur Verbesserung der nachfolgenden Oxidation Schwefelsäure zugegeben. Mittels einer Pumpe 6 und eines Zweistoffinjektors 7 wird der vorhydrolysierte Schlamm dann in die Reaktionsstufe für die Naßoxidation gefördert. Die Reaktionsstufe besteht hier aus drei hintereinandergeschalteten Blasensäulen 8, welche geflutet, gefahren und von Feststoffsuspension und Gas im Gleichstrom durchströmt werden. Über den Zweistoffinjektor 7 wird auch der für die Oxidation notwendige Sauerstoff in die Reaktionsstufe eingespeist und im Schlamm dispergiert. Die Betriebstemperatur in der Reaktionsstufe richtet sich nach der Zusammensetzung des Schlammes und den verwendeten Werkstoffen Im vorliegenden Beispiel wird von einer Temperatur von 160°C ausgegangen, bei der noch relativ preisgünstige Werkstoffe (stahlemailliert) verwendet werden können. Zur Erzielung der für den Oxidationsprozeß notwendigen Endtemperatur muß beim Anfahren der Anlage Wärme zugeführt werden. Zu diesem Zweck kann über den Stutzen 9 Heißdampf eingeleitet werden. Nach Erreichen der Endtemperatur springt die exotherme Oxidationsreaktion an; unter den angegebenen Bedingungen ist dann keine Wärmezufuhr mehr erforderlich.

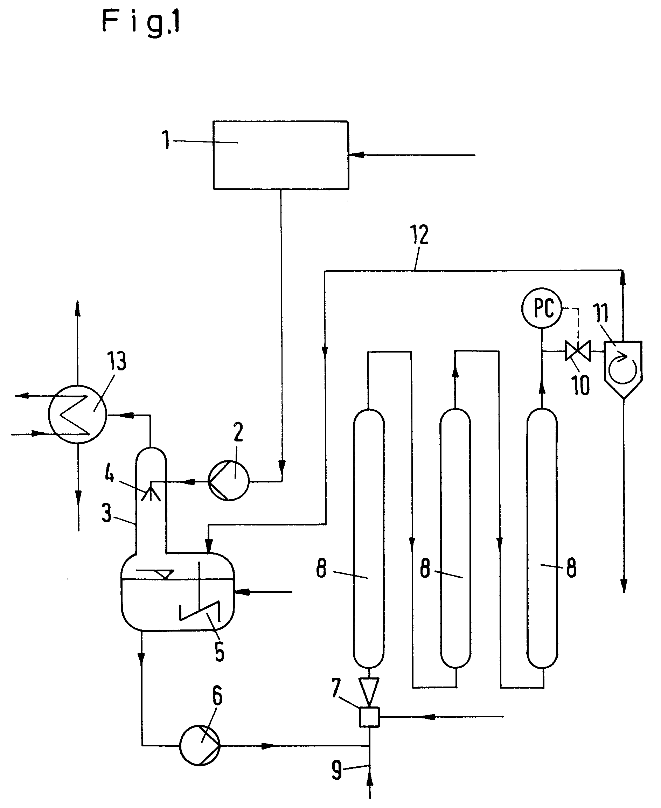

Die ausreagierte Mischung aus Gas (überwiegend CO₂, Wasserdampf und überschüssiger Sauerstoff) und oxidiertem Schlamm wird dann über ein aus verschleißfestem Werkstoff gefertigtes, druckgeregeltes Ventil 10 entspannt. Bei den hier vorliegenden Temperaturen und Drücken liegt der optimale Druck nach der Entspannung bei etwa 1 bar, d.h. bei Atmosphärendruck, so daß eine Druckregelung nach dem Entspannungsventil entfallen kann, Die Entspannung muß aber nicht unbedingt auf atmosphärischen Druck erfolgen; es kann auch auf ein anderes Druckniveau, z.B. im Vakuumbereich, entspannt werden. Bei der Entspannung erfolgt eine Teilverdampfung des unter Druck stehenden, heißen Ablaufgemisches. Die bei der Entspannung entstehenden Brüden werden dann von der durch die Entspannungsverdampfung abgekühlten Flüssigkeit im Zyklonabscheider 11 abgetrennt und über die Rückführungsleitung 12 mit dem Zulauf im Einspritzkondensator 3 in direkten Kontakt gebracht. Die Brüden enthalten die gesamte Enthalpiedifferenz des Ablaufstroms zwischen der Austrittstemperatur und der Siedetemperatur bei dem gewählten Druck, Diese Enthalpie wird auf den Zulauf zurückgeführt. Die inertgasreichen, nicht auskondensierten Restbrüden werden in einem am Kopf des Einspritzkondensators 3 angeordneten Kondensator 13 vom Wasserdampf weitgehend befreit und anschließend einer thermischen Abgasreinigung zugeführt. In Fällen, bei denen die Brüden praktisch keinen Inertgasanteil besitzen (Mehrzahl der Druckhydrolysen), spielt die Phasenführung zwischen Brüden und Zulauf keine Rolle, Bei Naßoxidationen, bei denen Luft oder Sauerstoff sowie Kohlendioxid im Ablauf enthalten sind, kann durch eine Gegenstromführung eine verbesserte Wärmenutzung erreicht werden. Durch die Kondensation der Brüden im Einspritzkondensator 3 wird die Verdampfungswärme der Brüden weitgehend auf den Zulauf übertragen. Der eingedüste Klärschlamm kann bei diesem Verfahren allerdings maximal nur auf die Siedetemperatur des Wassers bei dem gewählten Entspannungsdruck aufgeheizt werden, Wählt man daher einen zu niedrigen Entspannungsdruck, so wird nur ein Teil der Brüdenenthalpie ausgenutzt; es wird keine vollständige Kondensation erreicht. Wählt man hingegen einen zu hohen Entspannungsdruck, so kann man zwar die Kondensationswärme des Brüdenstromes vollständig ausnutzen, In diesem Fall ist aber der Massenstrom der Brüden kleiner, so daß man ebenfalls nicht zu einer optimalen Wärmeausnutzung kommt. Bei optimaler Wahl des Entspannungsdrucks kann man in der einstufigen Anordnung gemäß Fig. 1 nur etwa die Hälfte der zur Erwärmung des Zulaufs auf Ablauftemperatur erforderlichen Wärme zurückgewinnen. Sofern bei der Naßoxidation hinreichend große Wärmemengen freigesetzt werden (Verbrennungswärme), reicht diese Wärmerückgewinnung jedoch aus, um bei einem auf mindestens 4 % Trockensubstanz aufkonzentrierten Klärschlamm unter den angegebenen Bedingungen einen wärmeautarken Betrieb der Gesamtanlage zu gewährleisten. Die Wärmeverluste werden dabei durch die Oxidationswärme in der Reaktionsstufe ausgeglichen.

Zur Realisierung des direkten Wärmeübergangs von den Brüden auf den Zulauf sind im Prinzip alle aus der Wärme- und Stoffübertragungstechnik bekannten Gas-Flüssig-Kontaktapparate einsetzbar. Insbesondere können Rieselfilmapparate, zweiphasig durchströmte Schüttungen, Kolonnen, Blasensäulen sowie Sprüh- und Strahlwäscher eingesetzt werden. Besonders geeignet sind Einspritzkondensatoren in Form von Strahlwäschern, da sie keine Einbauten besitzen, gasseitig einen geringen Druckverlust aufweisen und kompakte, robuste und preisgünstige Apparate darstellen.

### Ausführungsbeispiel

Konzentration des Klärschlamms im Tank 1:
40 bis 45 g TS pro 1
Temperatur des Klärschlamms beim Eintritt in den Einspritzkondensator 3: 30°C
Temperatur des vorhydrolysierten Klärschlamms nach dem Verlassen des Rührbehälters 5: 90°C, pH-Wert = 1 bis 2
Kompression auf 22 bar durch Förderpumpe 6
Temperatur in der Reaktionsstufe: 150 bis 160°C
Druck in der Reaktionsstufe: 20 bar (Kopfdruck)
Druck nach der Entspannung: ca. 1 bar
Temperatur von Brüden und Abgas in der Rückführungsleitung 12: 96°C.

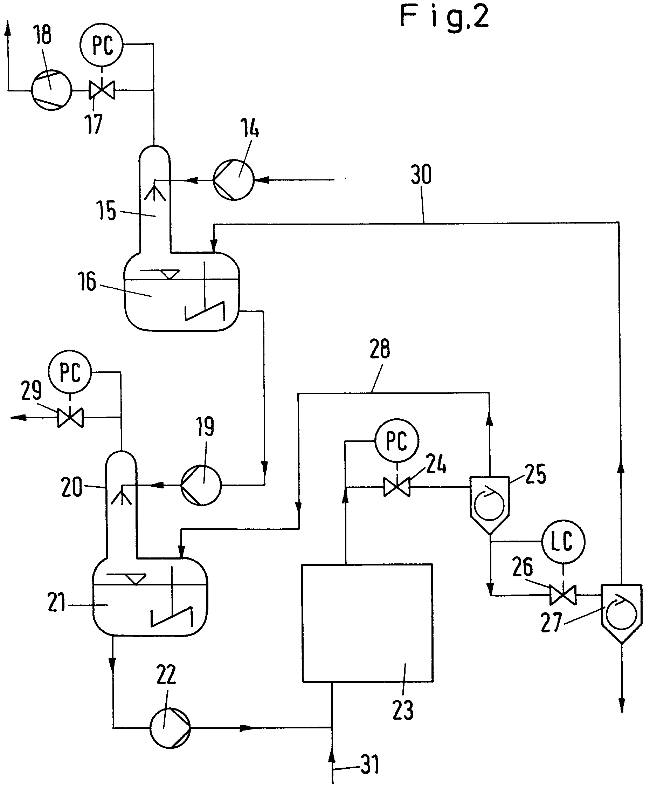

Als zweites Anwendungsbeispiel wird eine Druckhydrolyse mit zweistufiger Entspannung beschrieben. Das zugehörige Verfahrensschema ist in Fig. 2 dargestellt. Das zu behandelnde Rohabwasser bzw. die Abwassersuspension wird mittels der Pumpe 14 in den Einspritzkondensator 15 eingedüst, dessen Sumpf als Rührbehälter 16 ausgebildet ist. Freiwerdende Inertgase werden am Kopf des Einspritzkondensators 15 druckgeregelt (17) mittels einer Vakuumpumpe 18 abgezogen. Aus dem ersten Rührbehälter 16 wird das zu behandelnde Abwasser mittels einer zweiten Förderpumpe 19 in einen zweiten Einspritzkondensator 20 eingedüst, dessen Sumpf den zweiten Rührbehälter 21 bildet. Aus dem zweiten Rührbehälter 21 wird das vorhydrolysierte Abwasser mittels der Pumpe 22 in den Hydrolysereaktor 23 (Reaktionsstufe) gepumpt. Das hydrolysierte Abwasser wird anschließend zweistufig entspannt. Die; erste Entspannungsstufe besteht aus dem druckgeregelten Entspannungsventil 24 und dem nachgeschalteten Zyklonabscheider 25, die zweite Entspannungsstufe aus dem mit dem Ausgang des Zyklonabscheiders 25 verbundenen niveaugeregelten Entspannungsventil 26 und dem nachfolgenden (zweiten) Zyklonabscheider 27. Vom Zyklonabscheider 25 der ersten Entspannungsstufe führt eine Rückführungsleitung 28 zu dem zweiten Rührbehälter 21. Durch diese Leitung werden die in der ersten Entspannungsstufe freigesetzten Brüden in den Rührbehälter 21 zurückgeführt. Die Brüden vermischen sich dort mit dem eingespritzten Abwasser, kondensieren und geben dabei ihre Wärme an das Abwasser ab. Inertgase können dabei ähnlich wie bei dem ersten Rührbehälter 16 durch ein druckgeregeltes Ventil 29 über Kopf entweichen, wobei hier keine Vakuumpumpe erforderlich ist, da der zweite Einspritzkondensator mit Überdruck betrieben wird.

Die in der zweiten Entspannungsstufe freiwerdenden Brüden werden im Zyklonabscheider 27 von der flüssigen Phase abgetrennt und über eine weitere Rückführungsleitung 30 in den ersten Rührbehälter 16 zurückgeführt, kondensieren dort ebenfalls im eingedüsten Abwasserstrom und geben dabei ihre Wärme ab. Bei dieser zweistufigen Entspannung und Rückführung werden also die auf einem niedrigeren Druck- und Temperaturniveau befindlichen Brüden der zweiten Entspannungsstufe zur Vorheizung des Abwassers in dem ersten Einspritzkondensator 15 benutzt, wahrend die über die Leitung 28 zurückgeführten, auf einem höheren Druck- und Temperaturniveau befindlichen Brüden im zweiten Einspritzkondensator 20 zur weiteren Aufheizung des Abwassers dienen. Die Entspannung und Brüdenrückführung kann auch in mehr als zwei Stufen erfolgen. Dabei werden die Brüden analog zu dem beschriebenen zweistufigen Ausführungsbeispiel aus der ersten Entspannungsstufe des Ablaufstroms, die die höchste Kondensationstemperatur besitzen, in die letzte Kondensationsstufe des Zulaufstroms eingespeist, während die Brüden aus der letzten Entspannungsstufe des Ablaufstroms in der ersten Kondensationsstufe des Zulaufstromes zur Wärmerückgewinnung eingesetzt werden. Mit dieser Gegenstromfahrweise läßt sich mehr als die Hälfte der verfügbaren Wärme nutzen. Die sinnvollerweise zu wählende Stufenzahl wird natürlich durch den mit steigender Stufenzahl ansteigenden apparativen Aufwand begrenzt. Der zur Deckung der Wärmebilanz erforderliche Energiebedarf wird hier durch Einheiten von Dampf 31 in den Zulaufstrom zur Druckhydrolyse aufgebracht.

Das vorstehend beschriebene Beispiel einer Druckhydrolyse mit zweistufiger Entspannung wurde mit folgenden Betriebsdaten ausgeführt:
Abwassertemperatur beim Eintritt in den ersten Einspritzkondensator 15: 25°C
Abwassertemperatur beim Verlassen des ersten Rührbehälters 16: 87°C
Abwassertemperatur beim Verlassen des zweiten Rührbehälters 21: 137°C
Druck in der Reaktionsstufe 23: 10 bar (Kopfdruck)
Temperatur in der Reaktionsstufe 23: 180°C
Temperatur des Ablaufs am Zyklonabscheider 25: 140°C
Temperatur des Ablaufs am Zyklonabscheider 27: 90°C
Druck und Temperatur in der Rückführungsleitung 28: 3,6 bar, 140°C
Druck und Temperatur in der Rückführungsleitung 30: 0,7 bar, 90°C.

Alle Drücke sind Absolutdrücke
Die zur Deckung der Wärmebilanz bei guter Anlagenisolierung erforderliche Dampfmenge beträgt knapp 0,12 t Dampf pro t Zulauf. Würde man auf jede Warmerückgewinnung verzichten, so müßte man 0,32 t Dampf pro t Zulauf aufwenden, so daß sich der Energiebedarf fast auf ein Drittel reduziert (Dampfeinleitung: Sattdampf 30 bar).

## Patentansprüche

1. Verfahren zum Wärmeaustausch zwischen kaltem Zulauf und heißem Ablauf bei einer Anlage zur Naßoxidation, Druckhydrolyse oder Chemolyse von Klärschlamm oder Abwasser bei erhöhter Temperatur und erhöhtem Druck, dadurch gekennzeichnet, daß in dem heißen Ablauf eine Druckentspannung durchgeführt wird, die dabei entstehenden Brüden von der wäßrigen Phase abgetrennt, zum kalten Zulauf zurückgeführt und mit ihm in direkten Kontakt gebracht werden, so daß zumindest ein Teil der Brüden dort auskondensiert und den Zulauf aufheizt.

2. Verfahren nach Anspruch 1, dadurch gekennzeichnet, daß die Entspannung in mehreren Druckstufen erfolgt und die entstehenden Brüden in ebenso vielen Stufen im Gegenstrom in den Zulauf eingespeist werden.

3. Verfahren nach den Ansprüchen 1 bis 2, dadurch gekennzeichnet, daß der Zulauf in einem Gas-Flüssig-Kontaktapparat im Gegen-, Gleich- oder Kreuzstrom mit den zurückgeführten Brüden in Kontakt gebracht wird.

4. Vorrichtung zur Durchführung des Verfahrens nach den Ansprüchen 1 bis 3, bestehend aus einer Druckreaktionsstufe (8, 23) zur Naßoxidation, Druckhydrolyse oder Chemolyse, dadurch gekennzeichnet, daß der Druckreaktionsstufe (8, 23) ein Entspannungsorgan (10, 24, 26) und ein Phasentrennapparat (11, 25, 27) nachgeschaltet sind und daß vom Phasentrennapparat (11, 25, 27) eine Brüdenrückführungsleitung (12, 28, 30) zu einem der Druckreaktionsstufe (8, 23) vorgeschalteten Gas-Flüssig-Kontaktapparat (3, 16, 20) führt.

5. Vorrichtung nach Anspruch 4, dadurch gekennzeichnet, daß der Gas-Flüssig-Kontaktapparat aus einem Einspritzkondensator besteht.

6. Vorrichtung nach den Ansprüchen 4 bis 5, dadurch gekennzeichnet, daß zur Naßoxidation die Reaktionsstufe aus einer oder mehreren hintereinandergeschalteten Blasensäule(n) (8) besteht.
